# EUROPÄISCHE PATENTANMELDUNG

(11) **EP 3 355 330 A1**
(43) Veröffentlichungstag der Anmeldung: **01.08.2018**
(21) Anmeldenummer: 18153341.5
(22) Anmeldetag: 25.01.2018
(51) Int. Cl.: H01H 9/22, H01H 71/56, H02B 1/052, H02B 1/32

(54) **HALTEKLAMMER ZUR LAGEFIXIERUNG EINES AUF EINER TRAGSCHIENE MONTIERTEN SCHALTGERÄTES**

(30) Priorität: 25.01.2017 DE 102017101453
(71) Anmelder: Eaton Intelligent Power Limited, Dublin 4 (IE)
(72) Erfinder: GATTRINGER, Thomas, 3943 Schrems (AT)
(74) Vertreter: Eaton IP Group EMEA

(57) **Zusammenfassung**

Es wird eine Halteklammer (1) zur Lagefixierung eines auf einer Tragschiene (2) montierten Schaltgerätes (3) vorgeschlagen, wobei die Halteklammer (1) einen ersten Schenkel (4), einen zweiten Schenkel (5) und einen, die beiden Schenkeln (4,5) miteinander verbindenden Mittelteil (6) aufweist, wobei der erste Schenkel (4) und der zweite Schenkel (5) an deren freien Enden eine Befestigungseinrichtung (7) zum lösbaren Befestigen der Halteklammer (1) an die Tragschiene (2) aufweisen, wobei das Mittelteil (6) eine Durchführungsöffnung (8) für eine Schaltgerätebetätigungswelle (9) aufweist.

## Beschreibung

Die Erfindung betrifft eine Halteklammer zur Lagefixierung eines auf einer Tragschiene montierten Schaltgerätes gemäß dem Oberbegriff des Patentanspruches 1.

Es sind Schaltgeräte bekannt, welche mittels einer Schaltgerätebetätigungswelle mit einer Betätigungseinrichtung an einer Tür eines Schaltschrankes verbunden sind, um das Schaltgerät von außerhalb des Schaltschrankes zu schalten. Die Schaltgerätebetätigungswelle ist hierbei ein fragiler Bauteil, welcher bei Überbelastung oftmals bricht. Weiters ist eine genaue Ausrichtung der Schaltgerätebetätigungswelle zu der Betätigungseinrichtung an der Tür erforderlich, da bei Abweichungen außerhalb der Toleranz die Federkraft des Schaltgerätes nicht mehr ausreichend ist, auch die Betätigungseinrichtung in eine Auslöseposition zu verbringen. Bei einem ausgelösten Schaltegerät kann das dazu führen, dass das Schaltegerät von außen nicht als ausgelöst zu erkennen ist.

Um die Schaltgerätebetätigungswelle zu stützen ist es bekannt, die Schaltgerätebetätigungswelle über eine zusätzliche Halterung, welche am Rahmen des Schaltschrankes befestigt ist, zu stützen. Diese Halterung hat allerdings den Nachteil, dass diese am Rahmen geeignete Punkte zur Befestigung benötigt. Weiters ist die Ausrichtung der Halterung sehr aufwendig und aufgrund der Summierung von Toleranzen fehlerbehaftet. Weiters blockiert diese rahmengestützte Halterung den Zugang zum Schaltgerät, wodurch diese Halterung bei Wartungsarbeiten zu entfernen ist.

Weiters ist es bekannt die Schaltgerätebetätigungswelle direkt durch Aufbauten am Schaltgerätegehäuse zu stützen. Im Vergleich zu einer rahmengestützten Halterung ist hierbei die Ausrichtung verbessert. Allerdings benötigt eine derartige Halterung eigene Aufnahmen am Schaltgerätegehäuse, welche nicht bei jedem Schaltgerät vorhanden sind. Weiters kann die Halterung aufgrund der Befestigung an dem Gehäuse nur geringere Kräfte aufnehmen, beziehungsweise kann eine mechanische Überbelastung der Halterung zu einer direkten Beschädigung des Schaltgerätegehäuses führen.

Aufgabe der Erfindung ist es daher eine Halteklammer der eingangs genannten Art anzugeben, mit welcher die genannten Nachteile vermieden werden können, mit welcher es möglich ist die Schaltgerätebetätigungswelle zuverlässig und genau zu stützen, welche hohe Belastungen aufnehmen kann und welche trotzdem einfach herstellbar und montierbar ist.

Erfindungsgemäß wird dies durch die Merkmale des Patentanspruches 1 erreicht.

Dadurch ergibt sich der Vorteil, dass eine zuverlässige, leicht zu montierende, genaue und dennoch robuste Stützung für die Schaltgerätebetätigungswelle bereitgestellt werden kann. Dadurch kann die Schaltgerätebetätigungswelle zuverlässig vor einem Überlastungsbruch geschützt werden. Weiters kann die Halteklammer direkt an die Tragschiene montiert werden, wodurch die Schaltgerätebetätigungswelle zuverlässig zum Schaltgerät ausgerichtet werden kann, wodurch die Schaltgerätebetätigungswelle auch zuverlässig den Schaltzustand des Schaltgerätes weiterleiten kann. Weiters kann die Halteklammer Kräfte direkte an die Tragschiene weiterleiten, wodurch das Schaltgerät nicht mechanisch belastet wird. Durch die direkte Montage der Halteklammer an der Tragschiene sind zusätzliche Befestigungsaufnahmen nicht erforderlich. Die Anordnung der Halteklammer ist weiters platzsparrend und behindert keine Wartungsarbeiten. Weiters ergibt sich der Vorteil, dass das Schaltgerät gegen ein seitliches Verrutschen auf der Tragschiene gesichert werden kann, wodurch das Schaltgerät zuverlässig zu dem Betätigungselement an der Schaltschranktür ausgerichtet gehalten werden kann.

Die Unteransprüche betreffen weitere vorteilhafte Ausgestaltungen der Erfindung.

Ausdrücklich wird hiermit auf den Wortlaut der Patentansprüche Bezug genommen, wodurch die Ansprüche an dieser Stelle durch Bezugnahme in die Beschreibung eingefügt sind und als wörtlich wiedergegeben gelten.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 eine bevorzugte Ausführungsform der Halteklammer in Aufsicht;
Fig. 2 die bevorzugte Ausführungsform der Halteklammer in Seitenansicht;
Fig. 3 die bevorzugte Ausführungsform der Halteklammer in Draufsicht;
Fig. 4 die bevorzugte Ausführungsform der Halteklammer in einer axonometrischen Darstellung;
Fig. 5 eine erste bevorzugte Ausführungsform einer Schaltgeräteanordnung in einem ersten Zustand in einer axonometrischen Darstellung;
Fig. 6 die erste bevorzugte Ausführungsform einer Schaltgeräteanordnung in einem zweiten Zustand in einer axonometrischen Darstellung;
Fig. 7 die erste bevorzugte Ausführungsform einer Schaltgeräteanordnung in einem dritten Zustand in einer axonometrischen Darstellung;
Fig. 8 eine zweite bevorzugte Ausführungsform einer Schaltgeräteanordnung in einer axonometrischen Darstellung;
Fig. 9 einen Teil einer bevorzugten Ausführungsform eines Schaltschrankes.

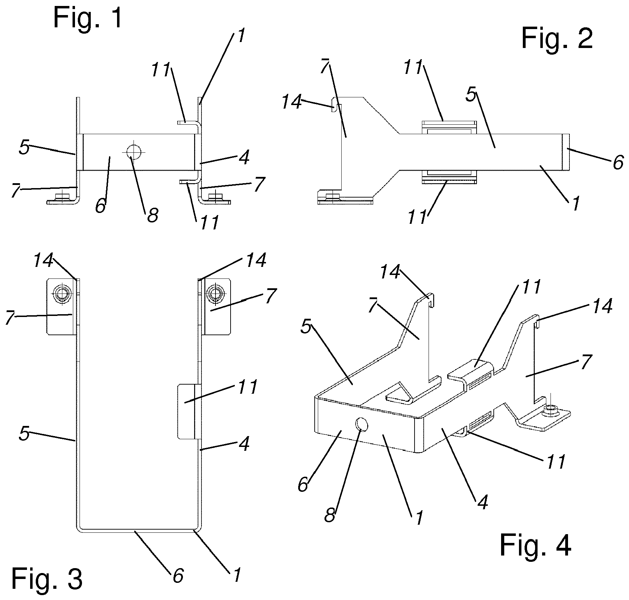

Die Fig. 1 bis 4 und 6 bis 9 zeigen eine bevorzugte Ausführungsform einer Halteklammer 1 zur Lagefixierung eines auf einer Tragschiene 2 montierten Schaltgerätes 3. Ein Schaltgerät 3 ist ein elektrotechnisches Gerät, welches dazu vorgesehen ist zwischen verschiedenen Zuständen zu Schalten. Das Schaltgerät 3 kann insbesondere ein Schutzschalter, insbesondere Fehlerstromschutzschalter oder Leitungsschutzschalter, oder ein herkömmlicher Schalter zum vorgebbaren Öffnen und Schließen eines Stromkreises sein. Derartige Schaltgeräte 3 werden für eine schnelle Montage üblicherweise auf eine normierte Tragschiene 2 montiert, wobei die Tragschiene insbesondere eine Hutprofilschiene, eine C- Profischiene oder eine G- Profilschiene sein kann. Die Halteklammer 1 ist ein eigenständiges Bauteil, welches dazu vorgesehen ist, die Lage des Schaltgerätes 3 auf der Tragschiene 2 zusätzlich zu fixieren. Diese Lagefixierung hat einerseits den Vorteil ein Verrutschen des Schaltgerätes 3 zu verhindern, und andererseits die Halteklammer 1 genau und mit wenig Toleranz auf das Schaltgerät 3 auszurichten.

Weiters ist vorgesehen, dass die Halteklammer 1 einen ersten Schenkel 4, einen zweiten Schenkel 5 und einen, die beiden Schenkeln 4,5 miteinander verbindenden Mittelteil 6 aufweist, wobei der erste Schenkel 4 und der zweite Schenkel 5 an deren freien Enden eine Befestigungseinrichtung 7 zum lösbaren Befestigen der Halteklammer 1 an die Tragschiene 2 aufweisen. Die beiden Schenkel 4,5 sowie das Mittelteil 6 bilden gemeinsam eine Aufnahme für das Schaltgerät 3 aus. Die Befestigungseinrichtung 7 sind dazu vorgesehen und ausgebildet, die jeweiligen Schenkel 4,5 direkt mit der Tragschiene 2 zu befestigen. Das Mittelteil 6 ist dazu vorgesehen an einer der Tragschiene 2 abgewandten Seite des Schaltgerätes 3 angeordnet zu werden.

Weiters ist vorgesehen, dass das Mittelteil 6 eine Durchführungsöffnung 8 für eine Schaltgerätebetätigungswelle 9 aufweist. Die Durchführungsöffnung 8 stellt hierbei eine zusätzliche Stütze und/oder Lager für die Schaltgerätebetätigungswelle 9 bereits. Die Durchführungsöffnung 8 kann insbesondere als einfaches Loch, insbesondere Kreisloch, ausgebildet sein. Alternativ kann die Durchführungsöffnung 8 einen Gleitlagereinsatz aufweisen, um eine besonders genaue Führung zu ermöglichen. Da das Schaltgerät 3 durch die Halteklammer 1 lagefixiert wird, kann eine sehr genaue Ausrichtung der Durchführungsöffnung 8 in Bezug auf das Schaltgerät 3 erfolgen.

Dadurch ergibt sich der Vorteil, dass eine zuverlässige, leicht zu montierende, genaue und dennoch robuste Stützung für die Schaltgerätebetätigungswelle 9 bereitgestellt werden kann. Dadurch kann die Schaltgerätebetätigungswelle 9 zuverlässig vor einem Überlastungsbruch geschützt werden. Weiters kann die Halteklammer 1 direkt an die Tragschiene 2 montiert werden, wodurch die Schaltgerätebetätigungswelle 9 zuverlässig zum Schaltgerät 2 ausgerichtet werden kann, wodurch die Schaltgerätebetätigungswelle 9 auch zuverlässig den Schaltzustand des Schaltgerätes weiterleiten kann. Weiters kann die Halteklammer 1 Kräfte direkte an die Tragschiene 2 weiterleiten, wodurch das Schaltgerät 3 nicht mechanisch belastet wird. Durch die direkte Montage der Halteklammer 1 an der Tragschiene 2 sind zusätzliche Befestigungsaufnahmen nicht erforderlich. Die Anordnung der Halteklammer 1 ist weiters platzsparrend und behindert keine Wartungsarbeiten. Weiters ergibt sich der Vorteil, dass das Schaltgerät 3 gegen ein seitliches Verrutschen auf der Tragschiene 2 gesichert werden kann, wodurch das Schaltgerät 3 zuverlässig zu dem Betätigungselement 12 an der Schaltschranktür 13 ausgerichtet gehalten werden kann.

In den Fig. 1 bis 4 ist eine bevorzugte Ausführungsform der Halteklammer 1 alleine dargestellt.

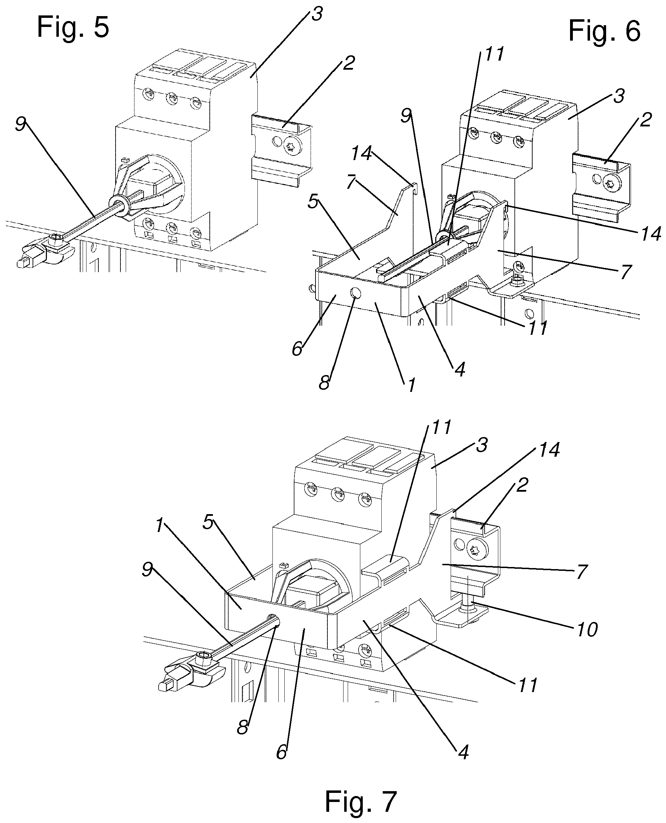

Weiters ist eine Schaltgeräteanordnung umfassend das Schaltgerät 3, die Tragschiene 2 und die Halteklammer 1 vorgesehen, wobei das Schaltgerät 3 und die Halteklammer 1 an der Tragschiene 2 befestigt sind, wobei das Schaltgerät 3 zwischen dem ersten Schenkel 4 und dem zweiten Schenkel 5 angeordnet, und durch die Halteklammer 1 gegen ein Verschieben entlang der Tragschiene 2 fixiert ist. Bevorzugte Ausführungsformen der kompletten Schaltgeräteanordnung sind in den Fig. 7 bis 9 dargestellt.

Insbesondere kann vorgesehen, dass das Schaltgerät 3 sich seitlich an den beiden Schenkeln 4,5 abstützt und dadurch lagefixiert wird.

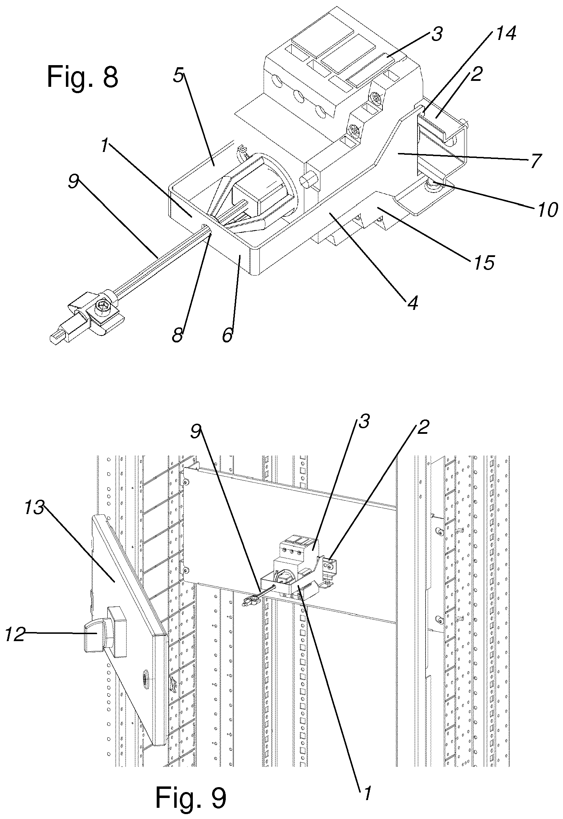

Weiters ist ein Schaltschrank mit der Schaltgeräteanordnung und einer Schaltschranktür 13 vorgesehen, wobei die Schaltschranktür 13 ein Betätigungselement 12 zum Schalten des Schaltgerätes 3 von Außen aufweist, wobei in einem geschlossenen Zustand der Schaltschranktür 13 das Betätigungselement 12 über die Schaltgerätebetätigungswelle 9 mit dem Schaltgerät 3 wirkverbunden ist. Ein Teil einer bevorzugten Ausführungsform des Schaltschrankes mit geöffneter Schaltschranktür 13 ist in Fig. 9 dargestellt. Das Betätigungselement 12 kann insbesondere ein Drehgriff sein. Weiters kann vorgesehen sein, dass eine Verbindung zwischen Betätigungselement 12 und Schaltgerätebetätigungswelle 9 bei einem Öffnen der Schaltschranktür 13 mechanisch getrennt wird.

Bevorzugt kann vorgesehen sein, dass zumindest eine der Befestigungseinrichtungen 7 zum Verhindern eines Verschiebens der Halteklammer 1 entlang der Tragschiene 2 eine Klemmeinrichtung aufweist, und dass die Klemmeinrichtung ein, in Richtung der Tragschiene 2 bewegbares Klemmelement 10 aufweist. Bei der Schaltgeräteanordnung kann bevorzugt vorgesehen sein, dass zumindest eine der Befestigungseinrichtungen 7 eine Klemmeinrichtung aufweist, und dass das Klemmelement 10 der Klemmeinrichtung gegen die Tragschiene 2 gepresst ist, um ein Verschieben der Halteklammer 1 entlang der Tragschiene 2 zu verhindern. Dadurch kann einfach ein seitliches Verschieben der Halteklammer 1 verhindert werden, wobei keine zusätzlichen Aufnahmen an der Tragschiene 2 benötigt werden.

Bevorzugt kann vorgesehen sein, dass das Klemmelement 10 eine in Richtung der Tragschiene 2 verschraubbare Schraube ist. Durch das Drehmoment der Schraube kann einfach die Anpresskraft der Schraubenspitze gegen die Tragschiene 2 eingestellt werden. Zur Aufnahme der Schraube kann die Klemmeinrichtung eine Schraubendurchführung mit einem Innengewinde aufweisen.

Alternativ kann dass Klemmelement 10 federbelastet sein, insbesondere eine Schnappvorrichtung.

Weiters kann die Klemmeinrichtung einen gegenüber dem Klemmelement 10 angeordneten Haken 14 zum Einhaken der Befestigungseinrichtung 7 in der Tragschiene 2 aufweisen. Dadurch ist eine besonders einfache Montage der Halteklammer 1 möglich.

Bevorzugt kann vorgesehen sein, dass der erste Schenkel 4, der zweite Schenkel 5 und das Mittelteil 6 einstückig als U-förmiges Blech ausgebildet sind. Dadurch kann die Halteklammer 1 besonders einfach ausgebildet sein. Weiters erhöht die Halteklammer 1 dadurch nur geringfügig die benötigte Breite an der Tragschiene 2.

Eine Montage der bevorzugten Ausführungsform der Halteklammer 1 ist in den Fig. 5 bis 7 beispielhaft dargestellt. In Fig. 5 ist das an der Tragschiene 2 montierte Schaltgerät 3 mit der Schaltgerätebetätigungswelle 9 dargestellt. Wie in Fig. 6 dargestellt, kann die Halteklammer 1 entlang der Schaltgerätebetätigungswelle 9 von vorne auf das Schaltgerät 3 aufgeschoben werden, wobei anschließend die Haken 14 der Schenkel 4,5 oben an der Tragschiene 2 eingehängt werden. Anschließend werden Schrauben als Klemmelemente 10 von unten an die Tragschiene 2 angeschraubt, um die Halteklammer 1 gegen ein Abziehen nach vorne formschlüssig, und gegen ein seitliches Verschieben reibschlüssig zu befestigen.

Weiters kann vorgesehen sein, dass zumindest einer der beiden Schenkel 4,5 wenigstens einen, sich in Richtung des anderen Schenkels 4,5 erstreckenden und manuell entfernbaren Fortsatz 11 aufweist. Der Fortsatz 11 erstreckt sich hierbei bevorzugt um eine Breite eines Anbaugerätes 15 in Richtung des anderen Schenkels 4,5. Durch das Belassen oder das Entfernen des Fortsatzes 11 kann schnell und einfach die Breite eines freien Raumes zwischen den beiden Schenkeln 4,5 verändert werden. Das Anbaugerät 15 kann insbesondere ein Fernauslöser, ein Wiedereinschaltgerät oder ein Hilfsschalter sein.

Hierbei kann ein Abstand der beiden Schenkel 4,5 zueinander einer Breite des Schaltgerätes 3 plus der Breite eines Anbaugerätes 15 entsprechen. Sofern bei der Schaltgeräteanordnung das Anbaugerät 15 verwendet wird, kann der Fortsatz 11 leicht entfernt werden, um den nötigen Raum zu schaffen. Eine bevorzugte Ausführungsform mit entferntem Fortsatz 11 ist in Fig. 8 dargestellt.

Sofern kein Anbaugerät 15 verwendet wird, kann der Fortsatz 11 belassen werden und stützt das Schaltgerät 3 seitlich ab. Eine bevorzugte Ausführungsform mit nicht entfernten Fortsatz 11 ist in Fig. 7 dargestellt.

Der Fortsatz 11 kann insbesondere mittels einer Sollbruchstelle mit dem restlichen Schenkel 4,5 verbunden sein.

## Patentansprüche

1. Halteklammer (1) zur Lagefixierung eines auf einer Tragschiene (2) montierten Schaltgerätes (3), wobei die Halteklammer (1) einen ersten Schenkel (4), einen zweiten Schenkel (5) und einen, die beiden Schenkeln (4,5) miteinander verbindenden Mittelteil (6) aufweist, wobei der erste Schenkel (4) und der zweite Schenkel (5) an deren freien Enden eine Befestigungseinrichtung (7) zum lösbaren Befestigen der Halteklammer (1) an die Tragschiene (2) aufweisen, wobei das Mittelteil (6) eine Durchführungsöffnung (8) für eine Schaltgerätebetätigungswelle (9) aufweist.

2. Halteklammer (1) nach Anspruch 1, **dadurch gekennzeichnet, dass** zumindest eine der Befestigungseinrichtungen (7) zum Verhindern eines Verschiebens der Halteklammer (1) entlang der Tragschiene (2) eine Klemmeinrichtung aufweist, und dass die Klemmeinrichtung ein, in Richtung der Tragschiene (2) bewegbares Klemmelement (10) aufweist.

3. Halteklammer (1) nach Anspruch 1 oder 2, **dadurch gekennzeichnet, dass** der erste Schenkel (4), der zweite Schenkel (5) und das Mittelteil (6) einstückig als U-förmiges Blech ausgebildet sind.

4. Halteklammer (1) nach einem der Ansprüche 1 bis 3, **dadurch gekennzeichnet, dass** zumindest einer der beiden Schenkel (4,5) wenigstens einen, sich in Richtung des anderen Schenkels (4,5) erstreckenden und manuell entfernbaren Fortsatz (11) aufweist.

5. Schaltgeräteanordnung umfassend ein Schaltgerät (3), eine Tragschiene (2) und eine Halteklammer (1) gemäß einem der Ansprüche 1 bis 4, wobei das Schaltgerät (3) und die Halteklammer (1) an der Tragschiene (2) befestigt sind, wobei das Schaltgerät (3) zwischen dem ersten Schenkel (4) und dem zweiten Schenkel (5) angeordnet, und durch die Halteklammer (1) gegen ein Verschieben entlang der Tragschiene (2) fixiert ist.

6. Schaltgeräteanordnung nach Anspruch 5, **dadurch gekennzeichnet, dass** zumindest eine der Befestigungseinrichtungen (7) eine Klemmeinrichtung aufweist, und dass ein Klemmelement (10) der Klemmeinrichtung gegen die Tragschiene (2) gepresst ist, um ein Verschieben der Halteklammer (1) entlang der Tragschiene (2) zu verhindern.

7. Schaltschrank mit der Schaltgeräteanordnung nach Anspruch 5 oder 6 und einer Schaltschranktür (13), wobei die Schaltschranktür (13) ein Betätigungselement (12) zum Schalten des Schaltgerätes (3) von Außen aufweist, wobei in einem geschlossenen Zustand der Schaltschranktür (13) das Betätigungselement (12) über die Schaltgerätebetätigungswelle (9) mit dem Schaltgerät (3) wirkverbunden ist.
